(19) Europäisches Patentamt

European Patent Office

Office européen des brevets

(11) **EP 4 632 688 A1**

(12) **EUROPEAN PATENT APPLICATION**

(43) Date of publication:
**15.10.2025 Bulletin 2025/42**

(21) Application number: **24305587.8**

(22) Date of filing: **10.04.2024**

(51) International Patent Classification (IPC):
**G06V 10/764** (2022.01)     **G06T 7/00** (2017.01)
**G06V 10/82** (2022.01)      **G06V 20/10** (2022.01)
**G06V 20/64** (2022.01)

(52) Cooperative Patent Classification (CPC):
**G06V 20/64; G06V 10/764; G06V 10/82;
G06V 20/10;** G06V 2201/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Dassault Systèmes
78140 Vélizy-Villacoublay (FR)**

(72) Inventors:
• **MARCUSANU, Ana
  VELIZY VILLACOUBLAY (FR)**
• **DURAND, Tom
  VELIZY VILLACOUBLAY (FR)**
• **LESUEUR, Louis
  VELIZY VILLACOUBLAY (FR)**
• **CAHU, Arthur
  VELIZY VILLACOUBLAY (FR)**

(74) Representative: **Bandpay & Greuter
11 rue Christophe Colomb
75008 Paris (FR)**

(54) **3D SCENE UNDERSTANDING**

(57) The disclosure notably relates to a computer-implemented method for machine learning a function configured to take as input a 3D point cloud of a real scene and to output localized representations each of a respective object of the real scene and, for each respective object, a class of the respective object among a predetermined set of classes. The method comprises obtaining a dataset of 3D point clouds annotated, for each 3D point cloud, with localized representations each of a respective object and, for each respective object, with a class of the respective object among the predetermined set of classes. The method comprises training the function based on the obtained dataset. The predetermined set of classes comprises a plurality of semantic classes and a plurality of geometric classes. Such a method forms an improved solution for 3D scene understanding.

EP 4 632 688 A1

**Description**

**TECHNICAL FIELD**

The disclosure relates to the field of computer programs and systems, and more specifically to a method, system and program for 3D scene understanding.

**BACKGROUND**

Current state-of-the-art methods for 3D scene understanding are based on machine learning functions that are trained in a supervised manner on datasets of point clouds of 3D scenes. These functions may then be able to detect objects in a point cloud, e.g., obtained by scanning a real scene. For training these functions, point clouds are generally annotated with localized representations of objects in the 3D scene and semantic annotations like the semantic classes of the objects. However, to ensure that each semantic class includes enough samples within the dataset and that these samples are representative of the semantic class to which they belong, the number of these semantic classes used for the training of machine learning functions is very limited (e.g., between 10 to 20 classes). This leads to the training of functions capable of processing only those objects belonging to this limited number of semantic classes, while ignoring the huge number of remaining objects. This hampers the automation of 3D scene understanding tasks in general.

Self-supervised techniques aim to overcome the issue of lack of annotated samples in datasets by proposing a pre-training of the functions on a pretext task. The pre-training is supervised using data augmentation and masking techniques, and the function learns intermediate representations of data and understands its underlying structure. The function is then fine-tuned in a supervised manner on a labeled dataset, i.e. further trained for the specific downstream task, such as object detection. These methods achieve better results on the given semantic classes from the labeled dataset used for fine-tuning, but do not tackle the issue of objects from non-considered semantic classes, which are still ignored.

Open Vocabulary approaches take advantage of functions trained on other modalities like image and text with datasets far denser and richer than the ones with 3D data. This allows to extend the variety of classes tackled by these functions. However, they heavily rely on massive datasets of image-text pairs which are generally scrapped from the internet and not always copyright free (recent lawsuits on that matter are still under investigation). Moreover, these methods have been shown to be sub-par with fully supervised approaches on the same number of classes of labeled 3D datasets while usually requiring considerably more computing power. Moreover, they still require a list of categories to detect and show poor performances when used to detect loosely defined or ambiguous semantic classes, e.g., "an object" or even "a small object".

Within this context, there is still a need for an improved solution for 3D scene understanding.

**SUMMARY**

It is therefore provided a computer-implemented method for machine learning a function configured to take as input a 3D point cloud of a real scene and to output localized representations each of a respective object of the real scene and, for each respective object, a class of the respective object among a predetermined set of classes. This method is referred to hereinafter as the machine learning method, or simply the method. The method comprises obtaining a dataset of 3D point clouds annotated, for each 3D point cloud, with localized representations each of a respective object and, for each respective object, with a class of the respective object among the predetermined set of classes. The method comprises training the function based on the obtained dataset. The predetermined set of classes comprises a plurality of semantic classes and a plurality of geometric classes.

The machine learning method may comprise one or more of the following:

- the obtaining of the dataset comprises:

  ∘ obtaining the 3D point clouds annotated with:

    ▪ for each 3D point cloud, the localized representations each of a respective object, and
    ▪ for each respective object of at least part of the objects, a class of the respective object among the semantic classes;

  ∘ computing a value of a geometrical descriptor for each remaining object of the 3D point clouds; and
  ∘ clustering the remaining objects according to a partitioning of the distribution of the computed values, the plurality of geometric classes corresponding to the resulting clusters;

- the geometrical descriptor is invariant with respect to orientation at least relative to a vertical axis;
- the geometrical descriptor for a given object comprises a metric of a bounding box of the given object;
- the geometrical descriptor for a given object comprises:

  ○ one or more coordinates each representing a respective dimension of the bounding box of the given object;
  ○ a coordinate representing a ratio between the minimum and the maximum of the dimensions of the bounding box of the given object;
  ○ a coordinate representing an area of the bounding box of the given object; and/or
  ○ a coordinate representing a volume of the bounding box of the given object;

- the obtaining of the dataset comprises:

  ○ obtaining the 3D point clouds annotated with:

    ▪ for each 3D point cloud, the localized representations each of a respective object,
    ▪ for each respective object of the at least part of the objects, a class of the respective object among the semantic classes, and
    ▪ for each remaining object, a class of the remaining object among a set of other semantic classes;

  ○ identifying, among all the objects, at least a portion of the objects of the other semantic classes; and
  ○ assigning a geometric class to each identified object;

- the identifying of the at least a portion of the objects of the other semantic classes comprises filtering all the objects of the other semantic classes based on at least one geometrical criterion;
- the at least one geometrical criterion comprises:

  ○ a criterion based on a bounding box volume;
  ○ a criterion based on a ratio between the minimum and the maximum of bounding box dimensions; and/or
  ○ a criterion based on the result of a multiplication of the bounding box volume and the ratio;

- the function is configured to perform 3D object detection or 3D object segmentation;
- the 3D point clouds of the dataset are 3D point clouds of indoor scenes and/or obtained via scanning; and/or
- the function has an architecture including a voxelization layer configured to voxelize the 3D point cloud taken as input and/or a convolutional neural network taking as input the 3D point cloud voxelized by the voxelization layer.

It is further provided a computer-implemented method for using a function machine-learnt according to the machine learning method. This method is referred to hereinafter as the using method. The using method comprises obtaining a 3D point cloud, optionally by scanning a real scene. The using method comprises applying the function to the obtained 3D point cloud.

It is further provided a computer program comprising instructions which, when the program is executed by a computer, cause the computer to carry out the machine learning method and/or the using method.

It is further provided a computer readable storage medium having recorded thereon the computer program.

It is further provided a system comprising a processor coupled to a memory and a graphical user interface, the memory having recorded thereon the computer program.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (*e.g.* the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG. 1 shows a flowchart of an example of the method;
- FIG. 2 shows the distribution of the number of object occurrences for all the semantic classes;
- FIG. 3 illustrates examples of objects belonging to semantic classes that are not well-represented or not well defined;
- FIG. 4 illustrates an example of geometrical descriptor;

- FIG. 5 shows an example of an ordering of objects based on a geometrical criterion;
- FIGs. 6 and 7 illustrate an example of the clustering of the remaining objects;
- FIGs. 8 and 9 illustrate an example of the using method;
- FIGs. 10 and 11 illustrate the metrics used to measure the performance of the trained function;
- FIG. 12 illustrates an example of 3D scene understanding;
- FIG. 13 illustrates an example of architecture of the function;
- FIG. 14 shows examples of results of the trained function; and
- FIG. 15 shows an example of the system.

## DETAILED DESCRIPTION

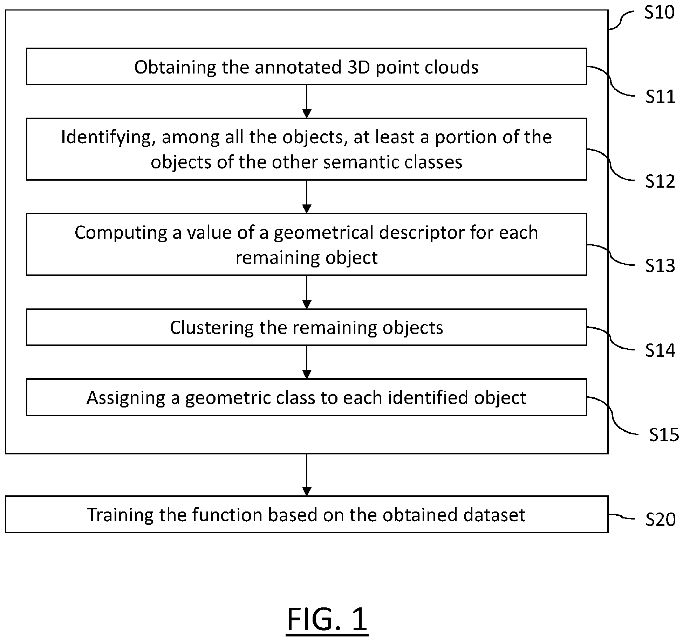

With reference to the flowchart of FIG. 1, it is proposed a computer-implemented method for machine learning a function configured to take as input a 3D point cloud of a real scene and to output localized representations each of a respective object of the real scene and, for each respective object, a class of the respective object among a predetermined set of classes. This method is referred to hereinafter as the machine learning method, or simply the method. The method comprises obtaining a dataset of 3D point clouds annotated, for each 3D point cloud, with localized representations each of a respective object and, for each respective object, with a class of the respective object among the predetermined set of classes. The method comprises training the function based on the obtained dataset. The predetermined set of classes comprises a plurality of semantic classes and a plurality of geometric classes.

Such a method forms an improved solution for 3D scene understanding.

Notably, the method improves the training of machine learning functions in the field of 3D scene understanding. In particular, it allows overcoming both the lack of annotations and the under-representation of some semantic classes in datasets used for the training of machine learning models in the field of 3D scene understanding. Indeed, adding geometrical classes to supervise the training of neural networks in the field of 3D scene understanding has several advantages.

Firstly, publicly available datasets offer a limited number of semantic classes as annotations to train machine learning models. This leads to the training of models which will be able to understand only the classes of objects they have been trained on and thus ignore a huge number of objects at inference on real-life scenes. The method allows considering these elements, if not by semantic class, at least by geometry or shape. Because the model is trained on both semantic and geometrical classes, it will be able to detect more objects than the ones belonging to the semantic classes given in the training dataset.

Moreover, this also allows the model to have a better understanding of the semantic classes used for training (in addition to the geometrical ones). Indeed, the use of geometrically defined classes reduces ambiguity on the semantically defined ones. That is to say that in addition to being able to deal with a larger amount and variety of objects, models trained with such classes also reach better performances on dealing with semantically defined objects.

Furthermore, the method allows for more accurate 3D scene understanding. Indeed, because the training of the function is more relevant, the machine-learnt function is able to detect more objects with better performances. The method therefore allows training a function to perform more accurate and relevant 3D object detection and/or 3D object segmentation based on a scan of the real scene. The method allows training the function to reconstruct a 3D representation that is closer to the real scene and/or to register the 3D point cloud more accurately.

The machine learning method and/or the using method may be computer-implemented. This means that steps (or substantially all the steps) of the machine learning method and/or the using method are executed by at least one computer, or any system alike. Thus, steps of the machine learning method and/or the using method are performed by the computer, possibly fully automatically, or, semiautomatically. In examples, the triggering of at least some of the steps of the machine learning method and/or the using method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of the machine learning method and/or the using method is to perform the machine learning method and/or the using method with a system adapted for this purpose. The system may comprise a processor coupled to a memory and a graphical user interface (GUI), the memory having recorded thereon a computer program comprising instructions for performing the generating method. The memory may also store a database. The memory is any hardware adapted for such storage, possibly comprising several physical distinct parts (e.g. one for the program, and possibly one for the database).

By "database", it is meant any collection of data (i.e. information) organized for search and retrieval (e.g. a relational database, e.g. based on a predetermined structured language, e.g. SQL). When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

The using method may be included in a process, which may comprise, after applying the function to the obtained 3D point cloud, performing 3D scene understanding of the real scene based on the localized representations and classes of objects outputted by the function. The 3D scene understanding may be a process, possibly real time, comprising perceiving, analyzing and/or elaborating an interpretation of the real scene, e.g., observed through a network of sensors (e.g., the 3D point cloud taken as input by the function). For example, the 3D scene understanding may comprise performing 3D object detection, 3D object segmentation, 3D scene reconstructing, 3D point cloud registering and/or 3D mesh transformation based on the localized representations and classes of objects output by the function. Because the method improves the outputting of the localized representations and classes of objects, the method also improves the performing of 3D scene understanding of real scenes.

The 3D scene understanding may be a process performed based on 3D input data. For example, the 3D input data may be the 3D point cloud (e.g., acquired by scanning the real scene) taken as input by the function. The 3D scene understanding may for example involve 3D detection, as in the Fully Convolutional Anchor-Free 3D Object Detection (FCAF3D) method, or be the process described in the document Hou, Ji, et al. "Exploring data-efficient 3d scene understanding with contrastive scene contexts," Proceedings of the IEEE/CVF Conference on Computer Vision and Pattern Recognition, 2021 (https://openaccess.thecvf.com/content/CVPR2021/papers/Hou_Exploring_Data-Effi cient_3D_Scene_Understanding_With_Contrastive_Scene_Contexts_CVPR_2021_paper.pdf) which is incorporated herein by reference. As explained in this document, the 3D scene understanding may comprise collecting and labelling real 3D scenes.

Alternatively or additionally, still in the case of a process performed based on 3D input data, the 3D scene understanding may comprise performing any one or any combination of the applications described in the resource from google researchers Alireza Fathi and Rui Huang about 3D Scene Understanding with TensorFlow3D (https://ai.google blog.com/2021/02/3d-scene-understanding-with-tensorflow.html) which is incorporated herein by reference.

Alternatively or additionally, the performing of the 3D scene understanding may comprise performing 3D object detection. For example, each localized representation outputted by the function may represent an envelope of a respective real-world object inside the real scene (e.g., the localized representation may include 3D surfaces representing the real faces of the respective real-world object). For example, when the 3D point cloud is acquired by scanning the real scene, each localized representation may enclose points that have been sampled on a same real-world object (i.e., on the surfaces of this real-world object) inside the real scene. The parameters of each localized representation may include a semantic or geometric class, a center position, dimensions and/or an orientation. The performing of the 3D scene understanding may comprise, for each outputted localized representation, determining the object represented by the localized representation, e.g., based on the class and/or shape of the envelop represented by the localized representation. Alternatively, the function may also be trained to directly output, for each localized representation, the object represented by the localized representation.

Then, the performing of the 3D scene understanding may comprise performing 3D scene reconstructing. The 3D scene reconstructing may comprise determining a 3D representation of the real scene based on the output of the function. For example, the reconstructing of the 3D representation may comprise retrieving 3D representations of objects (e.g., Computer-Aided Design, CAD, models) of the real scene (e.g., from a database storing CAD models of objects) and assembling these 3D representations in a 3D scene according to the localized representations outputted by the function (each 3D representation representing a respective real object of the real scene). The assembled 3D objects may be the 3D objects determined for each localized representation and may be assembled according to the respective positions and orientations of the outputted localized representations. The 3D scene reconstructing may also comprise reconstructing walls and floor of the real scene based on the 3D point cloud and adding the reconstructed walls and floor to the 3D representation of the real scene.

Alternatively or additionally, the performing of the 3D scene understanding may comprise performing 3D object segmentation of the 3D point cloud. The segmentation may comprise labeling points (e.g., all the points) of the 3D point cloud according to the outputted localized representations and/or the outputted classes of objects. The labelling of the points may comprise assigning a respective label to each point according to the outputted localized representation and/or the outputted class of object to which the point belongs. The points assigned to a same label (i.e., the points of a same segment) may correspond to points that have been sampled on a same real-world object (i.e., on the surfaces of this real-world object) of the real scene. In that case, the function may output the label to be assigned to each point of the 3D point cloud. The function may be trained to output, in addition to the localized representations, the group of points that belong to each localized representation. Each group of points may gather points assigned to a same label and that, e.g., have been sampled on a same real-world object (i.e., on the surfaces of this real-world object) inside the real scene.

Alternatively or additionally, the performing of the 3D scene understanding may comprise performing 3D mesh transformation. The 3D mesh transformation may comprise transforming the 3D point cloud into a mesh representing the real scene. The mesh of the 3D point cloud may comprise, for each object, a respective mesh representing the object (e.g., including surfaces representing the object). In that case, each outputted localized representation may include the mesh of the object that the localized representation represents, and the transformation may comprise assembling the meshes based on the position and/or orientation of the outputted localized representations. Alternatively, the transformation may comprise, for each outputted localized representation, creating a mesh for each object (e.g., based on parameters and/or on the semantic or geometric class of the localized representation) and assembling all the created meshes.

Alternatively or additionally, the performing of the 3D scene understanding may comprise registering the 3D point cloud. The registering of the 3D point cloud may comprise aligning one or more portions of the 3D point cloud each with a reference point cloud (e.g., corresponding to a scan of an object). The registering may comprise, for each portion, determining the reference point cloud for the portion, and aligning the portion with the determined reference point cloud. The aligning of each portion may comprise determining rotation and/or scaling parameters for aligning the portion with the determined reference point cloud. In examples, the function may be configured for outputting also the one or more portions, the reference point cloud for each portion and/or the alignment for each portion (i.e., the rotation and/or scaling parameters for the alignment).

In examples, the process, prior to the performing of the using method, may also comprise the performing of the machine learning method. In other words, the process may comprise firstly the machine learning method for training the function, secondly the using method for applying the trained function and thirdly the performing of the 3D scene understanding based on the outputs of the function. Alternatively, the training of the function may be performed prior to the process. In that case, the machine learning method may be executed prior to the executing of the process, e.g., during an offline phase, and the process may be executed after based on the trained function, e.g. during an online phase.

After the training of the function, the using method comprises the obtaining of the 3D point cloud. The obtaining of the 3D point cloud may be performed by scanning the real scene, e.g., based on the one or more sensors. Alternatively, the 3D point cloud may already have been computed (e.g., by scanning a real or virtual scene), and recorded in a database. The obtaining may in that case comprise retrieving the 3D point cloud from the dataset. After the obtaining of the 3D point cloud, the using method comprises applying the trained neural network to the obtained point cloud, thereby performing the 3D scene understanding. For example, the function may output localized representations each of a respective object of the real scene and, for each respective object, a class of the respective object among a predetermined set of classes, and the using method may comprise performing the 3D scene understanding (e.g., the 3D object detection, the 3D object segmentation, the 3D scene reconstructing, the 3D point cloud registering and/or the 3D mesh transformation) based on the localized representations and classes of objects outputted by the function. Alternatively, the function may be trained to directly output the results of the 3D scene understanding (i.e., the detected 3D objects, the segments of 3D point cloud, the reconstructed 3D scene, the registered 3D point cloud and/or the resulting mesh of the 3D point cloud).

The obtaining S10 of the dataset is now discussed in more detail.

The dataset comprises 3D point clouds each for a respective real scene including objects (e.g., acquired by scanning the respective real scene). Each 3D point cloud of the dataset is annotated with localized representations each representing a respective object of the respective real scene. For example, the localized representations may form together a virtual representation of the real scene (e.g., this virtual representation may be recorded on a file), and the dataset may include a link between the 3D point cloud and this virtual representation (e.g., with the file containing the localized representations). The virtual representation may also comprise, for each object of the real scene, the class of the object. Alternatively or additionally, each point of the 3D point cloud may be labelled with the localized representation and/or the class of the object to which it belongs. The labelling of each point may be included in the 3D point cloud (e.g., with a variable in addition to the position parameters of each point). The 3D point cloud taken as input by the function is not annotated. The function is trained for annotating this 3D point cloud, i.e., to compute the localized representations and classes of objects present in the real scene from which this 3D point cloud is acquired.

The 3D point clouds of the dataset may be acquired from respective real scenes (or virtual representation of these respective real scenes) that may be indoor scenes such as offices, apartments and/or shops. The real scenes for which the dataset includes a 3D point cloud may all be different. The real scenes may correspond to a same category of environment (e.g., office, apartment and/or shop). Each real scene may comprise objects that are naturally present in this kind of category (e.g., tables and chairs for an office), and these objects may be positioned relative to each other. Each real scene may also comprise a (e.g., planar) floor and/or walls delimiting the real scene and/or one or more rooms that the real scene comprises. Each real scene may be an environment that exists in the real-world or may be imaginary (but that could exist in the real world). For example, the method may comprise generating one or more (e.g., all) of the real scenes (e.g., randomly and/or based on real-world environments).

Each real scene may comprise one or more (i.e., real) objects. Some (e.g., all) of real scenes of the dataset may be complex rooms, i.e., may each include several objects (e.g., more than ten or one hundred objects) and/or may each be non-rectangular in shape (e.g., with more than four walls and/or including one or more circular walls). Each localized representation annotating a 3D point cloud may represent the geometry of a real object positioned (or to be positioned) in the real scene. The real object may be manufactured in the real world subsequent to the completion of its virtual design.

Each 3D point cloud of the dataset is also annotated with, for each respective object of the real scene, a class of the respective object among the predetermined set of classes. The predetermined set of classes comprises a plurality of semantic classes. For example, the plurality of semantic classes may comprise one or more classes of furniture objects and/or one or more classes of decorative objects, or any other combination of object class types. Any furniture object herein may have a furnishing function in the real scene where they are placed. For examples, the real scenes of the dataset may each comprise one or more chairs, one or more lamps, one or more cabinets, one or more shelves, one or more sofas, one or more tables, one or more beds, one or more sideboards, one or more nightstands, one or more desks and/or one or more wardrobes. The predetermined set of classes may include a respective class for each of these furniture objects. Any decorative object herein may have a decorative function in the room where they are placed. For example, the real scenes of the dataset may each comprise one or more accessories, one or more plants, one or more books, one or more frames, one or more kitchen accessories, one or more cushions, one or more lamps, one or more curtains, one or more vases, one or more rugs, one or more mirrors and/or one or more electronic objects (e.g., refrigerator, freezer and/or washing machine). The predetermined set of classes may include a respective class for each of these decorative objects.

The predetermined set of classes also comprises a plurality of geometric classes. The plurality of geometric classes may complement the plurality of semantic classes. Each object may have a class among the semantic classes, and otherwise a class among the geometric classes. Each geometrical class may be defined by geometric criteria applied to geometry or shape. For example, the geometrical classes may be defined using solely geometric properties of objects (like its shape and/or size). The geometrical classes may be defined using solely geometric properties of its localized representation (e.g., the shape and/or size of its bounding box). The geometric classes may be assigned to objects that are under-represented in the dataset. For example, these objects may appear in less than a predetermined percent of the real scenes (e.g., in less than 10% of the real scenes).

The obtaining S10 of the dataset may comprise generating the 3D point clouds of the dataset, e.g., based on a point cloud generating method, such as the method for generating a training dataset disclosed in the European patent application number EP23305001.2, which is incorporated herein by reference. The point cloud generating method may comprise acquiring each 3D point cloud in any manner, e.g., by scanning a real scene. Each 3D point cloud may comprise points sampled on the surface of objects present in the real scene. Each point of the 3D point cloud may comprise spatial coordinates in a 3D space. The scanning may be performed by a user using a scanner inside of the real scene. Alternatively, the scanning of the real scene may be performed virtually by scanning a virtual representation of the real scene. This virtual representation may comprise virtual representations of objects present in the real scene (e.g., reproducing the shape of these objects). The scanning may comprise sampling points on the surface of these virtual representations of objects present in the real scene. Each real scene may be an environment that exists in the real-world or may be imaginary (e.g., created by a user to visualize a potentially real scene, which may then be constructed). The dataset may thus comprise 3D point clouds obtained by virtually scanning virtual representations of real scenes.

Alternatively, each 3D point cloud of the dataset may already have been generated at the time the method is executed (e.g., using the same point cloud generating method discussed above). In that case, the obtaining S10 of the dataset may comprise retrieving the already generated 3D point clouds, e.g., from a database on which they are stored. Alternatively yet, some of the 3D point clouds may already have been generated at the time the method is executed, while other 3D point clouds may not. In that case, the obtaining S10 may comprise retrieving the already generated 3D point clouds and generating the other 3D point clouds, e.g., by executing the same point cloud generating method discussed above.

The obtaining S10 of the dataset may also comprise annotating each 3D point cloud of the dataset, e.g., based on an annotating method. The annotating method may comprise determining the localized representations and classes of objects annotating the 3D point cloud. The annotating method may be performed in any manner. For example, the determining of the localized representations and classes of objects may be performed manually by a user. The annotating method may comprise, for each localized representation, placing the localized representation inside of a virtual environment representing the real scene, and assigning to the placed localized representation a class among the predetermined set of classes for the object represented by the localized representation. Alternatively, the annotating method may be performed automatically. For example, the 3D point cloud may be acquired from a virtual scan of a virtual environment as discussed above. In that case, the localized representations may correspond to the virtual representations of objects already present in the virtual environment, and the annotating method may comprise retrieving the localized representations from the virtual environment. The virtual environment may also comprise the class of each object represented in the virtual environment, and the annotating method may comprise retrieving the classes of each localized representation from the virtual environment.

Alternatively, each 3D point cloud of the dataset may already have been annotated at the time the method is executed (e.g., using the annotating method discussed above). In that case, the obtaining S10 of the dataset may comprise retrieving the already annotated 3D point clouds, e.g., from the database on which they are stored. Alternatively yet, some of the 3D point clouds may already have been annotated at the time the method is executed, while other 3D point clouds may not. In that case, the obtaining S10 may comprise retrieving the already annotated 3D point clouds and annotating the other 3D point clouds, e.g., by executing the same annotating method discussed above.

The training S20 of the function may be performed in any manner. For example, the training S20 of the function may be performed in a supervised manner. The training S20 of the function may comprise training the function to predict an annotation (i.e., the localized representations and classes) for a given 3D point cloud based on the examples of pairs of annotations and 3D point clouds that are present in the (i.e., training) dataset. The function is trained to output representations of objects present in the real scene from which the 3D point cloud taken as input is acquired, and each representation of an object is localized, i.e., it includes position coordinates of the object in the real scene. The function is also trained to output the class of each object (e.g., with labels assigned to the localized representations). The training S20 may comprise determining weights of the function so that the function is able to provide output annotations very close to the annotation of the 3D point clouds that the dataset includes.

In examples, the obtaining S10 may comprise determining the plurality of geometric classes based on the objects represented in the dataset. In that case, each 3D point cloud of the dataset may initially be annotated with localized representations for each object, but with classes only for the semantic classes. The obtaining S10 may comprise obtaining S11 of the 3D point cloud annotated with localized representations and semantic classes only for semantic objects. Each object that is not annotated with a class among the semantic classes and/or that does not belong to any of the semantic classes may not be labelled. Each 3D point cloud may only include a localized representation for each of these remaining objects (i.e., not annotated with a class among the semantic classes). For each remaining object, the obtaining S10 may comprise computing S13 a value of a geometrical descriptor for the remaining object. The obtaining S10 may then comprise using these values of geometrical descriptor computed for all the remaining objects for defining the plurality of geometric classes. In particular, the plurality of geometric classes may partition the computed values of geometrical descriptor. For example, the obtaining S10 may comprise clustering S14 the remaining objects according to a partitioning of the distribution of the computed values. In that case, the plurality of geometric classes may correspond to the resulting clusters. Each cluster may define a respective geometric class. The clustering S14 may be performed such that the number of objects within the clusters (i.e., the resulting geometric classes) is comparable to the number of objects within the semantic classes to ensure a balanced dataset without over- or under-represented classes.

The geometrical descriptor of a given object may be defined by one or more geometric properties of the given object (or of its localized representation). The localized representation of an object may be a bounding box encapsulating the object. Each representation is localized in the real scene, i.e., it includes position coordinates of the object in the real scene. The geometrical descriptor for a given object may comprise a metric of a localized representation of the given object (e.g., the bounding box encapsulating the object). The metric may measure the one or more geometric properties of the given object.

In examples, the geometrical descriptor may be invariant with respect to orientation at least relative to a vertical axis. In other words, the geometrical descriptor may be invariant with respect to the orientation of the object relative to the vertical axis. It means that the value of the geometrical descriptor may be the same for two same objects positioned with different orientations relative to the vertical axis (e.g., two tables turned differently, or two chairs facing each other). For example, the one or more geometric properties of the given object considered for computing the geometrical descriptor may be invariant with respect to the orientation relative to the vertical axis (e.g., the geometric properties may be calculated on dimensions and/or volume of objects). Such a geometrical descriptor improves the classification of objects by not taking their orientation in the real scene into account when classifying them. In examples, the geometrical descriptor may also be invariant with respect to other orientation(s), such as orientation(s) with respect to one or more horizontal axis.

In examples, the geometrical descriptor for a given object may comprise one or more coordinates each associated with a respective geometric property of the object (or of its localized representation). For example, the geometrical descriptor may comprise any one or any combination of the following coordinates. The geometrical descriptor may comprise one or more coordinates each representing a respective dimension of the localized representation (e.g., the bounding box) of the given object (e.g., one for each of the length, width and height of the bounding box). For example, the geometrical descriptor may comprise a respective coordinate for each of the minimum and/or the maximum of the dimensions of the bounding box. Alternatively or additionally, the geometrical descriptor may comprise a coordinate representing a ratio between the minimum and the maximum of the dimensions of the bounding box of the given object. Alternatively or additionally, the geometrical descriptor may comprise a coordinate representing an area of the bounding box of the given object. The area may be the area of the base of the bounding box (i.e., the result of the multiplying of the length and the width of the bounding box). Alternatively or additionally, the geometrical descriptor may comprise a coordinate representing a volume of the bounding box of the given object. The volume of the bounding box may be the result of the multiplying of the length, the width and the height of the bounding box.

In examples, the dataset may initially include 3D point clouds having objects that are initially annotated with a class among a set of other semantic classes. The other semantic classes may comprise objects that are under-represented in the dataset compared to the objects comprised in the plurality of the semantic classes. For example, these objects may appear in less than a predetermined percent of the real scenes (e.g., in less than 10% of the real scenes). These objects belonging to other semantic classes include the remaining objects that are clustered for determining the geometrical classes. In that case, the obtaining S10 may comprise identifying S12, among all the objects, at least a portion (e.g., all) of the objects of the other semantic classes. The identified objects may be the remaining objects considered for determining the geometrical classes. The obtaining S10 may then comprise assigning S15 a geometric class to each identified object. The assigning S15 may be performed after the determining of the geometric classes (e.g., based on steps S13 and S14). The assigning S15 may comprise, for each identified object, computing the geometrical descriptor of the identified object (e.g., by computing each coordinate of the geometrical descriptor), determining the geometric class to which the identified object belongs based on the geometrical descriptor (e.g., by determining to which cluster it belongs), and assigning the determined geometric class to the identified object. The training of the function may be performed based on the assigned geometric classes.

In examples, the identifying S12 of the at least a portion of the objects of the other semantic classes may comprise filtering all the objects of the other semantic classes based on at least one geometrical criterion. This allows keeping a reasonable number of such objects of other semantic classes to preserve a balanced dataset by filtering out the smallest, largest and/or flattest objects. For example, the at least one geometrical criterion comprises a criterion based on a bounding box volume, a criterion based on a ratio between the minimum and the maximum of bounding box dimensions and/or a criterion based on the result of a multiplication of the bounding box volume and the ratio.

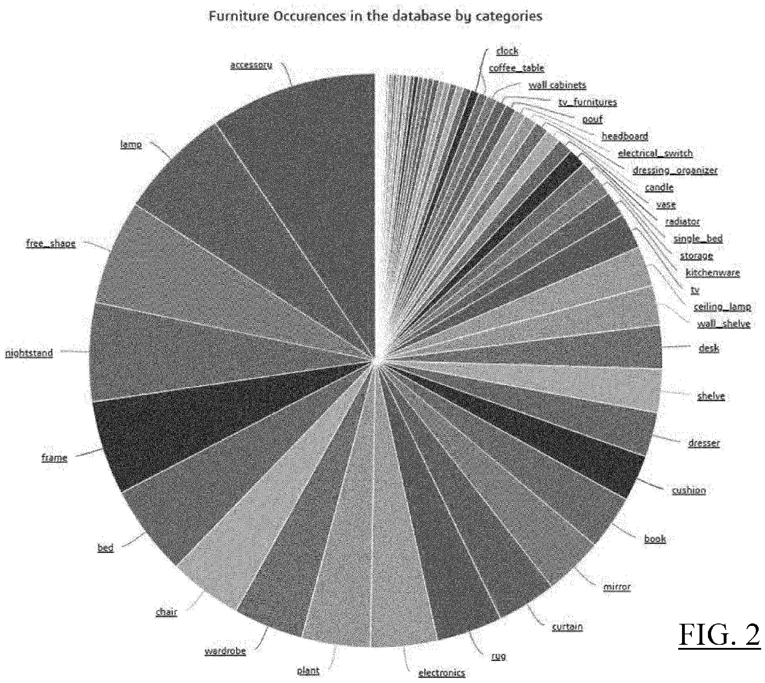

With reference to FIGs. 2 to 15, examples of implementations of the machine learning method and the using method are now presented.

The method consists in the definition of classes for 3D objects defined by geometric criteria. In addition to semantic classes, which are well-represented and well-defined in the annotations of 3D scene understanding datasets, the method proposes to add geometrically defined classes (the geometrical classes) to supervise the learning of the function (also hereinafter referred to as model), thereby accounting for objects belonging to under-represented classes; to do so, the method groups them by geometric descriptors rather than semantic ones.

Additionally, the geometrically defined classes alone may be used for supervision to unlock generic object detection without any semantics, meaning that objects may be grouped by shape characteristics. In this setting, semantic labels may optionally be added for objects belonging to semantic classes that are well-enough represented in the dataset.

Adding geometrically defined classes to supervise the training of neural networks in the field of 3D scene understanding has several advantages. Firstly, publicly available datasets offer a limited number of semantic classes as annotations to train neural networks. This leads to the training of models which are able to understand only the classes of objects they have been trained on and thus ignore a huge number of objects at inference on real-life scenes. The method allows to consider these elements, if not by semantic class, at least by geometry or shape. For instance, in the case of 3D object detection, a model trained on both semantic and geometrically defined classes is able to detect more objects than the ones belonging to the semantic classes given in the training dataset.

Furthermore, this allows the model to have a better understanding of the semantic classes used for training (in addition to the geometry-based ones). Indeed, the use of geometrically defined classes reduces ambiguity on semantically defined ones. That is to say that in addition to being able to deal with a larger amount and variety of objects, models trained with such classes also reach better accuracy on dealing with semantically defined objects.

The improvement in detecting objects labeled with semantic class labels when adding our geometrically defined classes is explained by the taking into account of more objects in the 3D scenes, which will be taken into account in the loss computation during training. The geometrical classes help the model to better discriminate the objects of semantic classes by allowing it to reduce ambiguities with objects of the geometric classes. Without these geometric classes, a lot of objects present in the 3D scenes are actually not labeled, implicitly marking them as "background" objects that the model should learn not to recognize. Labelling objects with geometrical classes helps the general understanding of the model by explicitly taking into account more objects and more classes in the loss, helping it to better distinguish each semantic class from the other ones, including the geometrically defined ones. Without the geometric classes, this is done implicitly but consequently leads to poorer results.

3D scene understanding datasets consist of samples of 3D data that may come in various 3D formats (including RGBD frames, point clouds, meshes, voxel grids...) and their annotations. Depending on the task for which the model is trained, the annotations considered may be different. For instance, for semantic segmentation, each point is labeled by its semantic class. For 3D object detection, annotations consist in a list of bounding boxes defined by a semantic class, a 3D position $(x, y, z)$, a size $(w, l, h)$ and an orientation $(\theta)$. The method comprises creating a new type of annotation: the geometrically defined class for 3D objects. This geometrically defined class may be used instead of the semantic class of the object when the semantic class is under-represented or ambiguously defined within the dataset. Geometrically defined classes are defined using solely geometric properties of a given 3D object (like its shape, the size of its bounding box, ...).

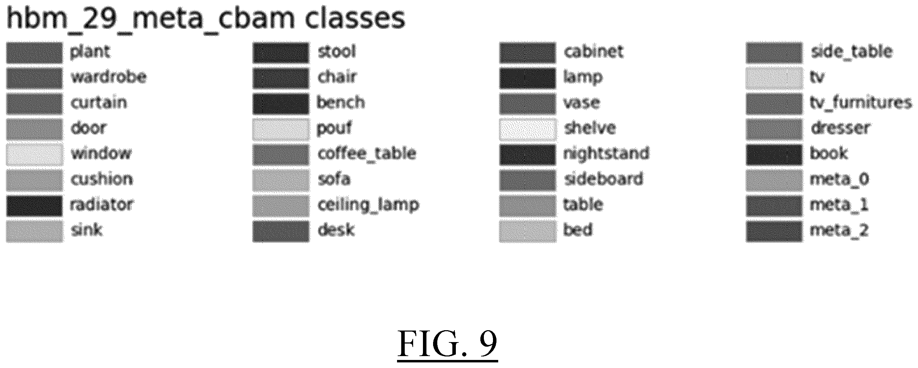

Let us consider a dataset of 3D point cloud scenes used to train a 3D object detection model with 175 semantic object classes. Only 29 of these categories are considered as well-represented enough in the dataset for training, leaving out 146 classes of objects. FIG. 2 shows the distribution of the number of object occurrences for the 175 semantic classes. The plurality of semantic classes considered by the method are the 29 semantic classes that are well-represented (having the highest count, see FIG. 9), and the other 146 remaining semantic classes are not considered (they are referred to as the "other semantic classes" previously). The method uses the geometrical classes for objects belonging to these 146 remaining classes. These geometrical classes are also hereinafter referred to as "meta-classes".

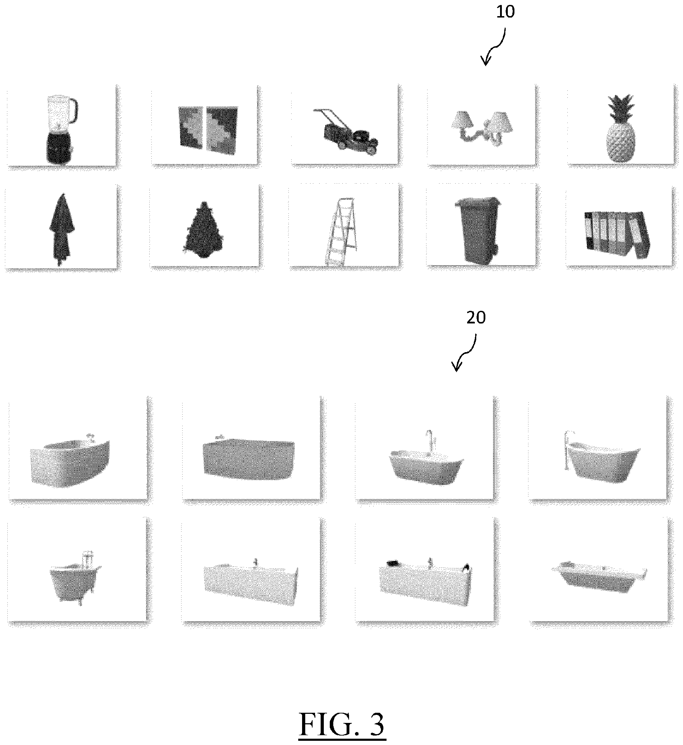

FIG. 3 illustrates examples of objects 10 belonging to the other semantic class "accessory" that is not well defined. Samples from the "accessory" class include small kitchen appliances, decorative objects, recycling bins and bathrobes. Well-defined classes are classes with clear semantic definition (e.g., the semantic class "chairs"). On the contrary, the semantic class "accessory" contains a variety of objects which is too wide for a clear semantic definition. The selection of the well-defined classes may be done manually, e.g., using qualitative criteria.

FIG. 3 also illustrates examples of objects 20 belonging to the other semantic class "bathtub" that is not well-represented. Well-represented categories are also categories that have enough occurrences throughout the dataset. The other semantic class "bathtub" is a well-defined semantic class, but, when the dataset lacks bathrooms, they do not appear enough in the dataset for the model to learn to identify them. The "bathtub" class is very consistent, but these objects appear only 80 times in the example of dataset of over 2000 rooms. The method may comprise selecting for the dataset only the classes that appear in more than 10% of the real scene (e.g., the rooms) of the dataset.

In this example of implementation, the method only uses the bounding boxes of objects and ignores the geometry of the point cloud within the bounding boxes. All bounding boxes may be represented in a simplified 2D space, regardless of the initial semantic of the object, using the following transformation:

$$(x, y, z, w, l, h, \theta) \rightarrow \left( \frac{min(w, l, h)}{max(w, l, h)}, V \right)$$

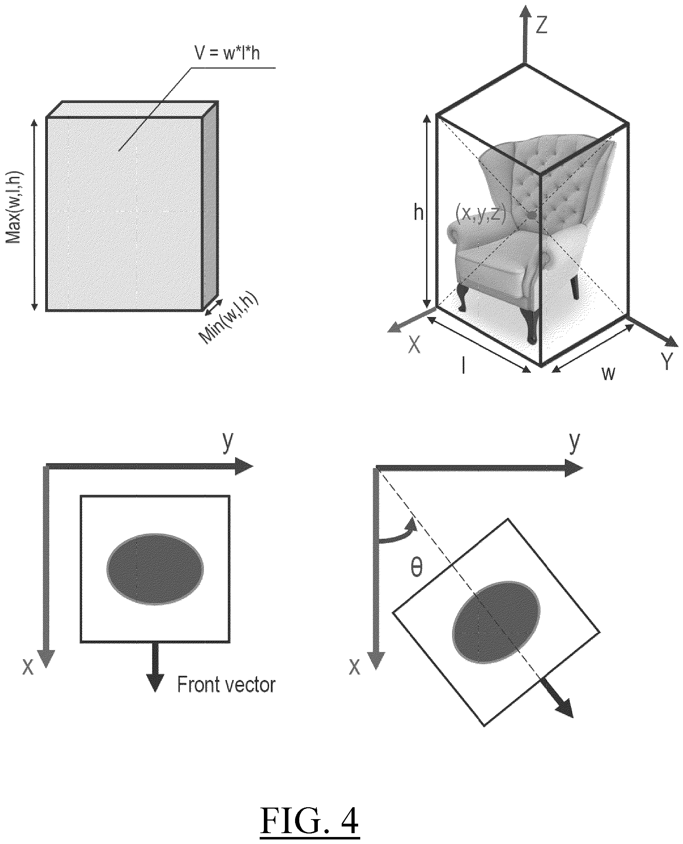

wherein, as illustrated in FIG. 4, $(x, y, z)$ are coordinates of the 3D position of the bounding box of the object, $(w, l, h)$ are its size and $\theta$ is its orientation. The resulting vector in the simplified 2D space may be the geometrical descriptor of the given object and may include a first coordinate which is a ratio between the minimum and the maximum of the dimensions $(w, l, h)$ of the bounding box and $V$ is the volume of the bounding box.

Then, the method groups objects by the shape of their bounding boxes, ranging from small and flat objects to big and cubic objects. The method keeps a reasonable number of such new objects to preserve a balanced dataset by filtering out objects that are too small, too big and too flat. To do so, the method comprises filtering all the objects of the other semantic classes based on at least one geometrical criterion. The at least one geometrical criterion may be based on the ratio and volume previously discussed. The at least one geometrical criterion may be applied using the following formulas:

$$min_{volume} < V < max_{volume}$$

$$min_{ratio} < \frac{\min(l, w, h)}{\max(l, w, h)} \leq max_{ratio}$$

$$min_{criterion} < criterion < max_{criterion}$$

wherein:

- $V$ denotes the volume of the bounding box in cubic meters.
- $min_{volume}$ is the minimal volume to accept the bounding box in the meta-class. $min_{volume} \in \mathbb{R}^+$ and appropriate values are $min_{volume} \in [0,1]$.
- $max_{volume}$ is the maximal volume to accept the bounding box in the meta-class. $max_{volume} \in \mathbb{R}^+$ and appropriate values are $max_{volume} \in [3,5]$.
- $l$ denotes the length of the bounding box in meters.
- $w$ denotes the width of the bounding box in meters.
- $h$ denotes the height of the bounding box in meters.
- $min_{ratio}$ is the minimal ratio min/max to accept the bound box in the meta-class. $min_{ratio} \in ]0,1]$ and appropriate values are $min_{ratio} \in ]0,0.3]$.
- $max_{ratio}$ is the maximal ratio min/max to accept the bound box in the meta-class. $max_{ratio} \in ]0,1]$ and appropriate values are $min_{ratio} \in ]0.7,1]$.

- *criterion* is a geometric criterion used for further filtering defined by $\dfrac{\min(l,w,h)}{\max(l,w,h)} \times V$. Other geometric criteria could be defined and used (detailed later).

- $min_{criterion}$ is the minimal value of the criterion for which to accept the bounding box in the meta-class.

$$min_{criterion} \in \mathbb{R}^+$$

and appropriate values are $min_{criterion} \in\ ]0, 0.4]$.

- $max_{criterion}$ is the maximal value of the criterion for which to accept the bounding box in the meta-class.

$$max_{criterion} \in \mathbb{R}^+$$

and appropriate values are $max_{criterion} \in [1,2]$.

In this example of implementation, the method may use the following values:

- $min_{volume} = 0$
- $max_{volume} = 3$
- $min_{ratio} = 0.3$
- $ma_{ratio} = 1$
- 

$$criterion = \frac{\min(l,w,h)}{\max(l,w,h)} \times V$$

- $min_{criterion} = 0.2\ m^3$
- $max_{criterion} = 1.5\ m^3$

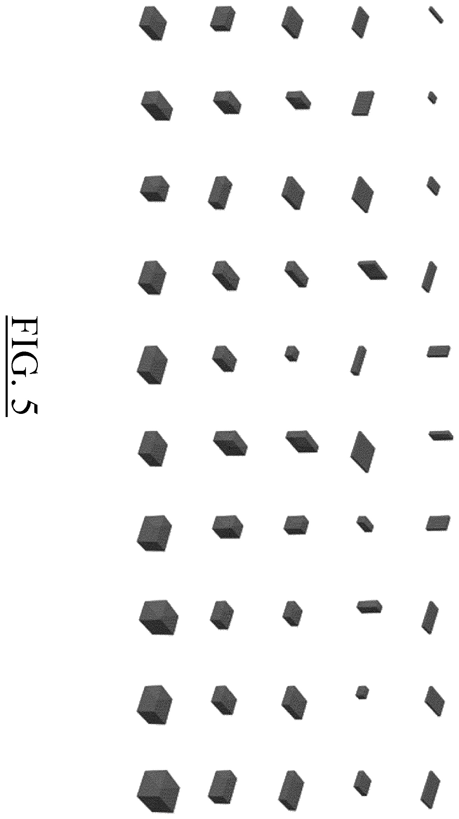

Then, the method may comprise filtering objects by sorting them by the *criterion* value and keeping objects between given bounds. The method may comprise determining these bounds in such a way that the number of objects within each meta-class is comparable to the number of objects within semantic classes to ensure a balanced dataset without over- or under-represented classes. FIG. 5 shows an example of bounding box sorted by the

$$criterion = \frac{\min(l,w,h)}{\max(l,w,h)} \times V$$
.

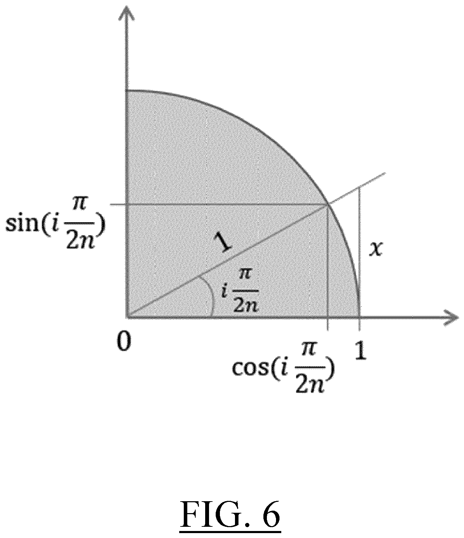

The method then comprises the determining of the geometrical classes. The method may comprise clustering the remaining bounding boxes (after the filtering) to create n clusters of objects, each cluster forming a meta-class. The method may use any unsupervised clustering method. FIG. 6 illustrates an example of clustering method that may be used for clustering using $n - 1$ straight lines. The clustering method may comprise defining the slope of the $i^{th}$ line (where i is an

$$slope_i = \tan\left(i \times \frac{\pi/2}{n}\right)$$

integer and $i \in [1, n - 1]$) with the following formula: . In the figure, *x* represents the slope of the straight line. The intercept theorem (Thales) provides the formula:

$$\frac{\sin(i\frac{\pi}{2n})}{x} = \frac{\cos(i\frac{\pi}{2n})}{1} \Leftrightarrow x = \frac{\sin(i\frac{\pi}{2n})}{\cos(i\frac{\pi}{2n})} = \tan(i\frac{\pi}{2n})$$

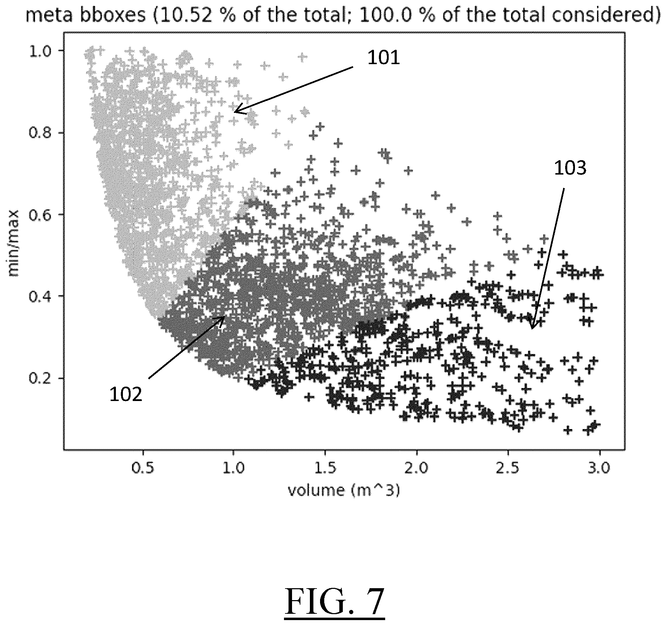

FIG. 7 illustrates the three clusters of objects 101, 102 and 103 resulting from the division into 3 clusters (thus 3 meta-classes) using straight lines as separators. In other examples, the method may use any one of any combination of other algorithms or heuristics for clustering, such as for example K-means, Gaussian Mixture Models or other unsupervised learning methods.

As previously said, other methods may be used to determine such a partition. For example, using the point clouds of each object, the method may use any one of the following two methods:

- A first method which comprises computing, for each point cloud, an embedding thanks to a point cloud encoder such as PointNet++ (e.g., such as discussed in the paper by Charles R. Qi, Li Yi, Hao Su, Leonidas J. Guibas, "PointNet++:

Deep Hierarchical Feature Learning on Point Sets in a Metric Space", 2017, which is incorporated herein by reference) and using a clustering method on the obtained embeddings, e.g., K-means with k the number of meta-classes, therefore obtaining the final partition.

- A first method which comprises computing for each point cloud an embedding based on geometric features (hand crafted or not) such as one or a combination of the ones detailed in the paper by Xian-Feng Han, Shi-Jie Sun, Xiang-Yu Song, Guo-Qiang Xiao, "3D Point Cloud Descriptors in Hand-crafted and Deep Learning Age: State-of-the-Art", 2020, which is incorporated herein by reference, and then using any clustering method to determine the partition.

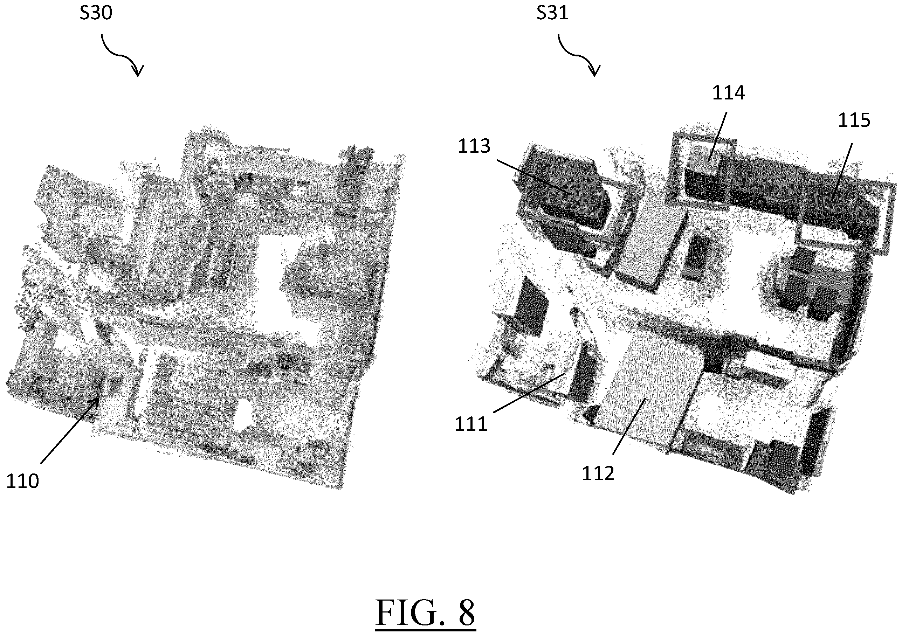

FIG. 8 illustrates an example of the using method. In this example, the using method is included in a process for the example task of 3D object detection in point clouds, using the 3 meta-classes as previously defined. The using method comprises obtaining S30 a 3D point cloud 110. The obtaining S30 of the 3D point cloud 110 may be performed by scanning a real scene (e.g., virtually based on a virtual representation of the real scene). Then, the using method comprises applying S31 the function to the obtained 3D point cloud. The function outputs localized representations (e.g., the bounding boxes 111, 112, 113, 114, 115) for objects of the real scene that are detected. FIG. 9 shows the retained 29 semantic classes ("plant", "wardrobe", "curtain", etc.) and the created 3 geometrical classes ("meta_0", "meta_1" and "meta_2") of the predetermined set of classes. Objects whose classes are not represented (with a semantic class) are detected as meta-classes (the geometrical classes). In this example, the bathtub 113, the fridge 114 and the cooker hood 115 are detected thanks to them. These objects 113, 114, 115 do not belong to a semantic class and have been detected based on the defined geometrical classes. This example illustrates that the method is able to detect objects that do not belong to the semantic classes (i.e., that are under-represented such as bathtubs, toilets, domestic appliances or electronic devices).

Moreover, the introduction of the geometrical classes also improves the accuracy of the model on the semantical classes as can be seen in the table 1 below. For each of the considered metrics, the function predicts more accurately the objects belonging to the semantic classes with the geometrical classes than without the geometrical classes.

Table 1:

| | Performance metrics without geometrical classes | | | | Performance metrics with geometrical classes | | | |
|---|---|---|---|---|---|---|---|---|
| classes | mAP @0.25 → | mAP @0.50 → | mAR @0.25 → | mAR @0.50 → | mAP @0.25 → | mAP @0.50 → | mAR @0.25 → | mAR @0.50 → |
| plant | 0.63 | 0.47 | 0.83 | 0.57 | 0.65 | 0.50 | 0.87 | 0.64 |
| wardrobe | 0.38 | 0.24 | 0.85 | 0.50 | 0.34 | 0.29 | 0.90 | 0.55 |
| curtain | 0.51 | 0.24 | 0.84 | 0.44 | 0.59 | 0.30 | 0.84 | 0.49 |
| door | 0.59 | 0.23 | 0.93 | 0.50 | 0.62 | 0.29 | 0.92 | 0.56 |
| window | 0.27 | 0.06 | 0.75 | 0.27 | 0.35 | 0.11 | 0.75 | 0.30 |
| cushion | 0.57 | 0.22 | 0.93 | 0.47 | 0.58 | 0.27 | 0.93 | 0.54 |
| radiator | 0.63 | 0.52 | 0.91 | 0.69 | 0.74 | 0.56 | 0.91 | 0.76 |
| sink | 0.57 | 0.36 | 0.98 | 0.66 | 0.58 | 0.39 | 1.00 | 0.73 |
| stool | 0.84 | 0.84 | 1.00 | 0.99 | 0.86 | 0.86 | 1.00 | 0.99 |
| chair | 0.94 | 0.92 | 0.99 | 0.98 | 0.93 | 0.93 | 0.99 | 0.98 |
| bench | 0.25 | 0.13 | 0.81 | 0.44 | 0.48 | 0.22 | 0.94 | 0.44 |
| pouf | 0.68 | 0.63 | 0.95 | 0.85 | 0.65 | 0.64 | 0.95 | 0.88 |
| coffee_table | 0.71 | 0.64 | 1.00 | 0.89 | 0.69 | 0.62 | 1.00 | 0.92 |
| sofa | 0.89 | 0.79 | 0.99 | 0.91 | 0.92 | 0.80 | 1.00 | 0.91 |
| ceiling_lamp | 0.71 | 0.54 | 0.94 | 0.75 | 0.68 | 0.56 | 0.95 | 0.77 |
| desk | 0.43 | 0.32 | 1.00 | 0.91 | 0.51 | 0.33 | 1.00 | 0.82 |
| cabinet | 0.59 | 0.35 | 0.98 | 0.73 | 0.63 | 0.42 | 0.99 | 0.77 |
| lamp | 0.64 | 0.37 | 0.86 | 0.55 | 0.67 | 0.46 | 0.92 | 0.65 |
| vase | 0.17 | 0.06 | 0.71 | 0.31 | 0.19 | 0.08 | 0.79 | 0.39 |
| shelve | 0.22 | 0.09 | 0.72 | 0.38 | 0.24 | 0.10 | 0.74 | 0.44 |
| nightstand | 0.59 | 0.49 | 1.00 | 0.88 | 0.59 | 0.53 | 1.00 | 0.92 |
| sideboard | 0.55 | 0.50 | 0.96 | 0.89 | 0.67 | 0.60 | 1.00 | 0.91 |
| table | 0.79 | 0.76 | 0.92 | 0.87 | 0.78 | 0.75 | 0.93 | 0.89 |
| bed | 0.95 | 0.75 | 0.98 | 0.84 | 0.97 | 0.71 | 0.98 | 0.84 |
| side_table | 0.70 | 0.64 | 1.00 | 0.98 | 0.64 | 0.63 | 0.98 | 0.96 |
| tv | 0.84 | 0.66 | 0.94 | 0.80 | 0.82 | 0.65 | 0.92 | 0.80 |
| tv_furnitures | 0.63 | 0.55 | 0.89 | 0.73 | 0.61 | 0.51 | 0.91 | 0.71 |
| dresser | 0.33 | 0.25 | 1.00 | 0.81 | 0.34 | 0.29 | 1.00 | 0.88 |
| book | 0.26 | 0.04 | 0.63 | 0.21 | 0.29 | 0.08 | 0.67 | 0.26 |
| **Total** | **0.58** | **0.44** | **0.91** | **0.68** | **0.61** | **0.46** | **0.92** | **0.71** |

The metrics used are now presented in more details.

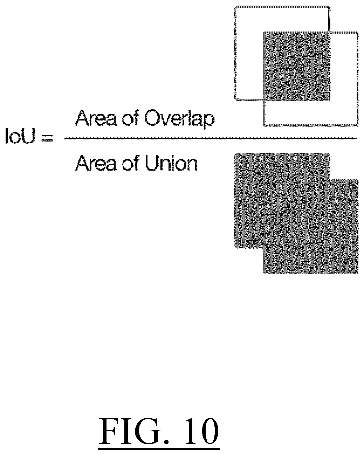

The common metrics used in 3D Object Detection are mean average precision (*mAP*) and mean average recall (*mAR*). These metrics are defined using an intersection over union (*IoU*) *threshold* to evaluate the model's predictions. For 3D bounding boxes, these union and intersection values are computed as volumes; for the sake of clarity, the 2D equivalent is visualized as areas on FIG. 10.

For a given class *c,* a predicted bounding box may be a *correct* prediction if it can be paired to a ground truth bounding box such that the *IoU* between the two bounding boxes is higher than a given *threshold.* Pairings are unique, in the sense that a given ground truth can be assigned to at most one prediction, and vice-versa. Pairings are made by decreasing order of *IoU* until either all ground truth or predicted bounding boxes are exhausted.

The following metrics may be used:

- **True Positive** (TP): correct model prediction, i.e. prediction that was matched with a bounding box of the same class such that *IoU > threshold.*
- **False Positive** (FP): incorrect model prediction, i.e. the model predicted a bounding box, but no corresponding ground truth annotation was matched or *IoU ≤ threshold.*
- **False Negative** (FN): missing prediction. An annotation that is not matched to any prediction (i.e. the object is present but was not detected by the model).
- **Precision** provides the fraction of the positive predictions that are actually correct.

$$precision = \frac{TP}{TP + FP}$$

- **Recall** provides the fraction of actual positive instances the model is able to correctly identify.

$$recall = \frac{TP}{TP + FN}$$

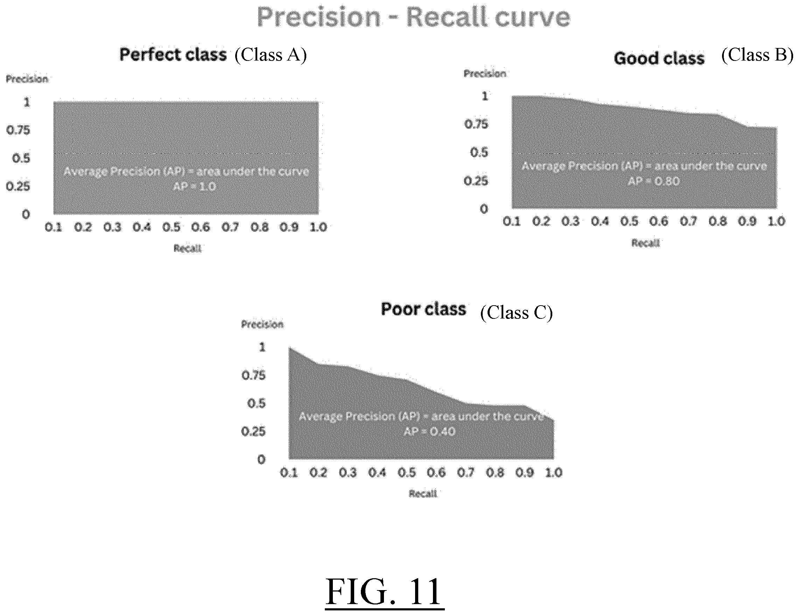

- **Precision-recall curve:** The trade-off between the quality and quantity of predicted bounding boxes can be controlled after inference, typically in the form of a confidence score that the model associates to each class and bounding box. This score can be thresholded to remove predictions that the model is not confident about, allowing to plot a graph of precision and recall as the confidence score threshold varies.
- **Average precision** (AP) is the area under the precision-recall curve for each class (see the precision-recall curves obtained for three classes illustrated in FIG. 11).
- **Mean average precision** *(mAP)* is the mean of APs across all classes. We usually denote *mAP@threshold* to specify at which IoU threshold we have computed the metrics (i.e. at which quality level).
- **Average Recall** (AR) is recall averaged over a range of IoU thresholds (from 0.5 to 1.0), and can be approximated as shown below, where o is the IoU, and *recall(o)* is the recall-IoU curve, with recall on the *y* axis, and varying IoUs on the x axis.
- **Mean average recall** *(mAR)* is the mean of ARs across all classes.

$$\text{Average recall } (AR) = 2 \int_{0.5}^{1.0} recall(o) \, do \qquad \text{Mean average recall} = \frac{\sum_{n=1}^{K} AR_n}{K}$$

Results of the method are now discussed.

The following table 2 illustrates the benefits of filtering the objects of the other semantic classes.

Table 2:

| Experiment | mAP@0.50 | mAR@0.50 |
|---|---|---|
| 0 meta-classes | 0.437 | 0.712 |
| 1 catch-all class: **no filtering** | 0.445 | **0.715** |
| 1 meta-class: with filtering | **0.459** | **0.715** |

Metrics are measured on semantic classes only. Table 2 shows that the filtering gives more robust results. Indeed, results are typically better than the baseline. As a reminder, the mAP (mean average precision) is related to the number of correct predictions among all the model's predictions whereas the mAR (mean average recall) is related to the number of correctly detected objects among all ground truth objects.

The following table 3 illustrates the prediction accuracy of the function for different number of geometrical classes.

Table 3:

| # meta-classes | mAP@0.50 | mAR@0.50 |
|:---:|:---:|:---:|
| 0 | 0.437 | 0.712 |
| 1 | 0.459 | **0.715** |
| 3 | **0.465** | 0.714 |
| 5 | 0.453 | 0.714 |

Metrics are measured on semantic classes only. The results are with the filtering step. The results show that the predictions are better for every number of geometrical classes (1, 3 or 5) than the baseline (i.e., without geometrical class).
The following table 4 illustrates the prediction accuracy of the function for different geometrical descriptors.

Table 4:

| Descriptor | Clustering | Invariance | mAP@0.50 | mAR@0.50 |
|:---:|:---:|:---:|:---:|:---:|
| Baseline: no meta-classes | | | 0.437 | 0.712 |
| (vol, minmax) | Lines | All rotations | 0.465 | 0.714 |
| (w * l, h) | Lines | Rotations around Z-axis | 0.45 | 0.713 |
| (vol, minmax) | k-means | All rotations | 0.45 | 0.719 |
| (w * l, h) | k-means | Rotations around Z-axis | **0.472** | **0.72** |
| (w, l, h) | k-means | None | 0.454 | 0.705 |

Metrics are measured on semantic classes only, with filtering and 3 meta classes when applicable. The results show that the prediction accuracy is typically better for every geometrical descriptor than the baseline without (i.e., without geometrical class). The better performance of the geometrical descriptor ($w * l, h$) illustrates the benefits of invariance at least around the vertical axis. Indeed, in indoor scenes, most appliances will not be lying on their side but will rotate only around the z axis (vertical axis).
The following table 5 illustrates another example with a lower number of semantic classes considered.

Table 5:

| Experiment | mAP@0.25 | mAP@0.50 | mAR@0.25 | mAR@0.50 |
|:---:|:---:|:---:|:---:|:---:|
| 6 classes + 0 meta-classes | 0.716 | 0.638 | 0.969 | **0.89** |
| 6 classes + 3 meta-classes | **0.793** | **0.654** | **0.985** | 0.871 |

In this other example, only 6 semantic classes considered: chair, sofa, desk, cabinet, table and bed. Three geometrical classes are defined. Metrics are measured on semantic classes only. The table shows that, even in that case, the results of the function are more accurate with the 3 geometrical classes than the baseline (i.e., without geometrical class).
Tables 6 and 7 below provide the results obtained for the semantic classes and for the geometrical classes. The results show that the detections from meta classes are useful, as they are well detected compared to semantic classes (e.g. "vase"). The metric "AP@0.25" for meta 0 is especially high at 0.49.

Tables 6:

| class | AP@0.25 | AP@0.50 | AR@0.25 | AR@0.50 |
|---|---|---|---|---|
| plant | 0.65 | 0.507 | 0.876 | 0.639 |
| wardrobe | 0.325 | 0.278 | 0.9 | 0.55 |
| curtain | 0.582 | 0.298 | 0.835 | 0.492 |
| door | 0.623 | 0.28 | 0.925 | 0.558 |
| window | 0.354 | 0.112 | 0.755 | 0.301 |
| cushion | 0.576 | 0.265 | 0.94 | 0.536 |
| radiator | 0.74 | 0.54 | 0.897 | 0.707 |
| sink | 0.578 | 0.382 | 1.0 | 0.727 |
| stool | 0.865 | 0.853 | 1.0 | 0.982 |
| chair | 0.932 | 0.927 | 0.989 | 0.981 |
| bench | 0.458 | 0.217 | 0.938 | 0.438 |
| pouf | 0.647 | 0.642 | 0.951 | 0.878 |
| coffee table | 0.69 | 0.624 | 1.0 | 0.921 |
| sofa | 0.913 | 0.804 | 1.0 | 0.903 |
| ceiling lamp | 0.675 | 0.556 | 0.95 | 0.777 |
| desk | 0.469 | 0.311 | 1.0 | 0.818 |

Table 7:

| class | AP@0.25 | AP@0.50 | AR@0.25 | AR@0.50 |
|---|---|---|---|---|
| cabinet | 0.634 | 0.426 | 0.988 | 0.781 |
| lamp | 0.67 | 0.46 | 0.92 | 0.667 |
| vase | 0.19 | 0.081 | 0.78 | 0.394 |
| shelve | 0.243 | 0.099 | 0.739 | 0.443 |
| nightstand | 0.589 | 0.54 | 1.0 | 0.917 |
| sideboard | 0.675 | 0.605 | 1.0 | 0.906 |
| table | 0.781 | 0.754 | 0.931 | 0.901 |
| bed | 0.966 | 0.711 | 0.978 | 0.822 |
| side-table | 0.646 | 0.619 | 0.98 | 0.959 |
| tv | 0.82 | 0.657 | 0.925 | 0.817 |
| tv-furnitures | 0.609 | 0.516 | 0.956 | 0.711 |
| dresser | 0.335 | 0.284 | 1.0 | 0.875 |
| book | 0.29 | 0.078 | 0.667 | 0.266 |
| meta-0 | 0.489 | 0.417 | 0.904 | 0.699 |
| meta-1 | 0.276 | 0.274 | 0.818 | 0.682 |
| meta-2 | 0.186 | 0.164 | 0.831 | 0.585 |
| mean | 0.577 | 0.446 | 0.918 | 0.707 |

The following table 8 illustrates the usefulness of the geometrical classes.

Table 8:

| Training Mode | AP@0.50 | AR@0.50 |
|---|---|---|
| 1 catch-all meta-class: no filtering | 0.128 | 0.531 |
| 1 meta-class with filtering | 0.301 | 0.569 |
| 3 meta-classes with filtering | **0.349** | **0.663** |

The results of table 8 show that, like semantic classes, training a model on a filtered, partitioned subset of objects improves overall detections.

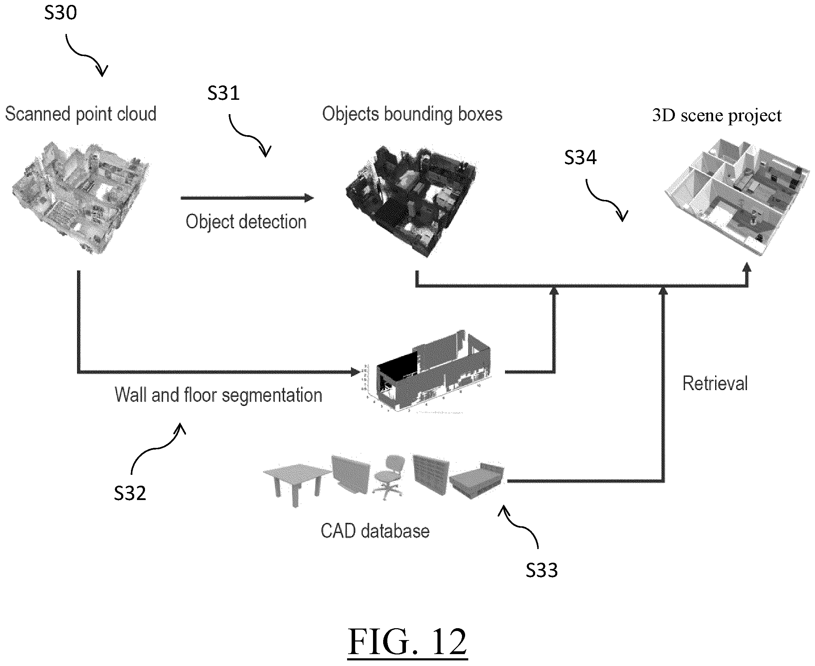

FIG. 12 illustrates an example of 3D scene understanding. In this example, the using method is included in process of 3D scene understanding which consists in reconstructing a 3D scene from a 3D point cloud. The process comprises performing the using method, especially the step of obtaining S30 of the 3D point cloud of the real scene and the step of applying S31 the function to the obtained 3D point cloud. The function outputs localized representations (bounding boxes in this example) representing the envelopes of objects inside the real scene. The function also outputs, for each localized representation, the class of the object that the localized representation represents among the semantic and geometrical classes.

The process also comprises reconstructing S32 walls and floor of the real scene based on the 3D point cloud. The reconstructing S32 of walls and floor may be executed after the applying S31 of the function, or in parallel. After the applying of the function, the process then comprises retrieving S33, for each localized representation, a 3D representation of the object (e.g., a Computer-Aided Design, CAD, model) that the localized representation represents. The retrieving S33 may be based on the class of the localized representation outputted for the object. The process then comprises assembling S34 the retrieved 3D representations in a 3D scene, thereby reconstructing the 3D scene of the 3D point cloud. The assembling S34 may be performed according to the position of the localized representations outputted by the function (each 3D representation representing a respective real object of the real scene).

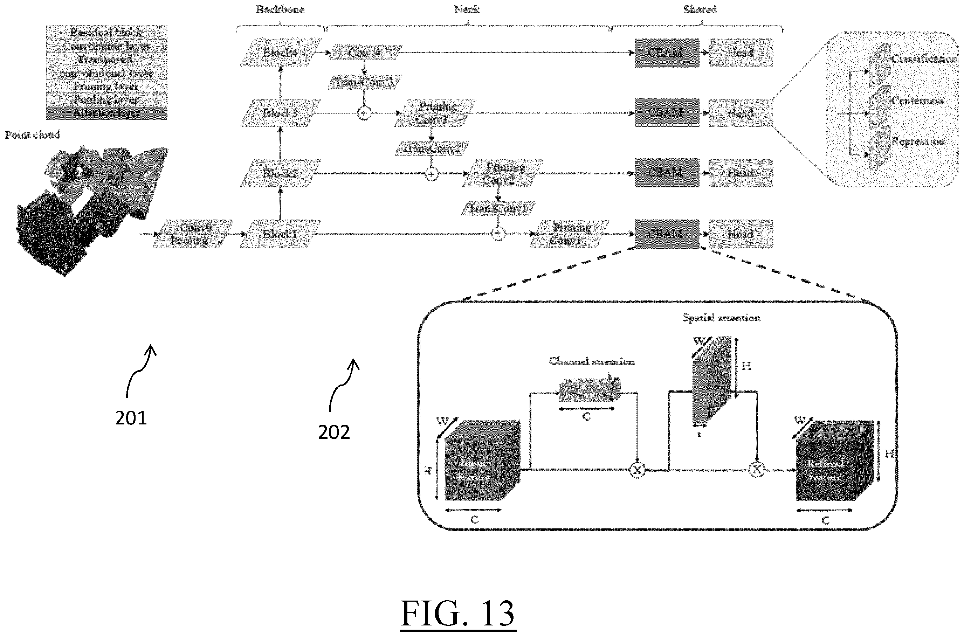

FIG. 13 illustrates an example of architecture of the function. The function has an architecture including a voxelization layer 201 configured to voxelize the 3D point cloud taken as input. The output of the voxelization layer 201 may be a sparse occupancy grid. The function also has a convolutional neural network 202 taking as input the 3D point cloud voxelized by the voxelization layer. The convolutional neural network outputs the localized representations and classes of each object. The convolutional neural may has a backbone including a sparse 3D ResNet CNN with CBAM blocks, a neck including pruning and decoder layers and a head including regress bounding box parameters, classification, mobius strip parametrization (encoding oriented bounding box invariances) and CBAM blocks as refinement.

For each ground truth bounding box, the last feature (grid) level on which this bounding box covers at least $N_{loc}$ output locations is selected. Locations are filtered using center sampling: only points close to the center of the box are kept (using centerness) as positive matches.

The loss may be defined using the following formula:

$$L = \frac{1}{N_{pos}} \sum_{\hat{x},\hat{y},\hat{z}} \left( L_{cls}(\hat{p},p) + \mathbf{1}_{\{p_{\hat{x},\hat{y},\hat{z}} \neq 0\}} L_{reg}(\hat{b},b) + \mathbf{1}_{\{p_{\hat{x},\hat{y},\hat{z}} \neq 0\}} L_{cntr}(\hat{c},c) \right)$$

wherein $N_{pos}$ is number of matched locations, $L_{cls}$ is focal loss, for classification, $L_{reg}$ is IoU between boxes, regression loss and $L_{cntr}$ is binary cross entropy, for centerness.

The method may use a parametrization for being invariant with respect to the front face of the bounding box. With the original parametrization, 4 different bounding boxes can represent a same object. By denoting $q = w/l$, the following parametrizations define the same bounding box:

$$(q,\theta), \left(\frac{1}{q}, \theta + \frac{\pi}{2}\right), (q, \theta + \pi), (\frac{1}{q}, \theta + \frac{3\pi}{2})$$

In fact, these 4 parameters also represent the same point on a Mobius strip. The method may thus use a re-parametrization of bounding boxes, using a classical Mobius strip embedding. Given a location $(\hat{x}, \hat{y}, \hat{z})$, the bounding box $(x, y, z, w, l, h, \theta)$ may be re-parametrized $(\delta_1, \delta_2, \delta_3, \delta_4, \delta_5, \delta_6, \delta_7, \delta_8)$ with:

$$\delta_1 = x + \frac{w}{2} - \hat{x} \qquad \delta_4 = \hat{y} - y + \frac{l}{2} \qquad \delta_7 = \ln\frac{w}{l}\sin(2\theta)$$

$$\delta_2 = \hat{x} - x + \frac{w}{2} \qquad \delta_5 = z + \frac{h}{2} - \hat{z} \qquad \delta_8 = \ln\frac{w}{l}\cos(2\theta)$$

$$\delta_3 = y + \frac{l}{2} - \hat{y} \qquad \delta_6 = \hat{z} - z + \frac{h}{2}$$

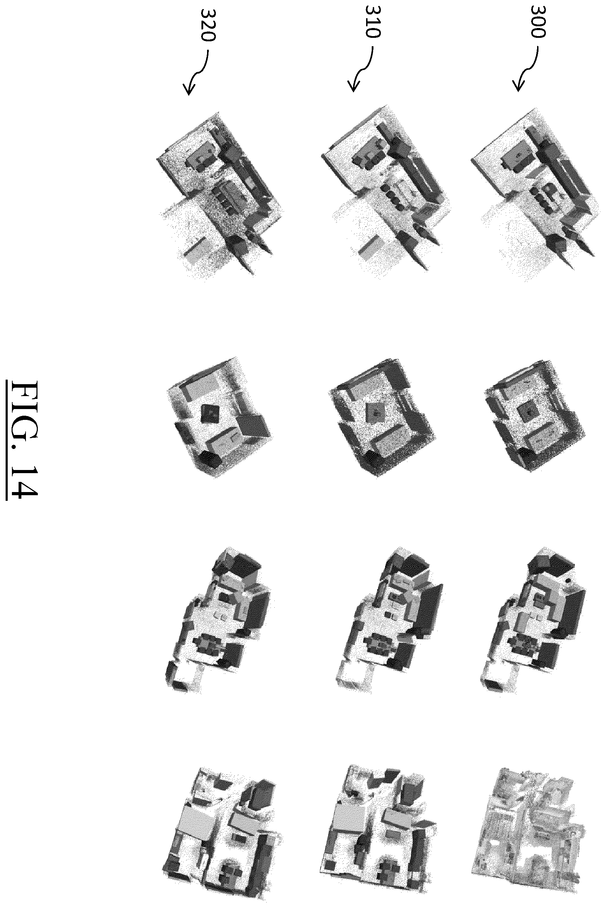

FIG. 14 shows examples of results of the trained function. In particular, the figure shows the results obtained for two functions 310, 320 trained using the method compared to the ground truth 300. The results are illustrated using the legend in FIG. 9. The results show that the use of geometric classes enables more objects to be detected, and more precise detection of objects in semantic classes.

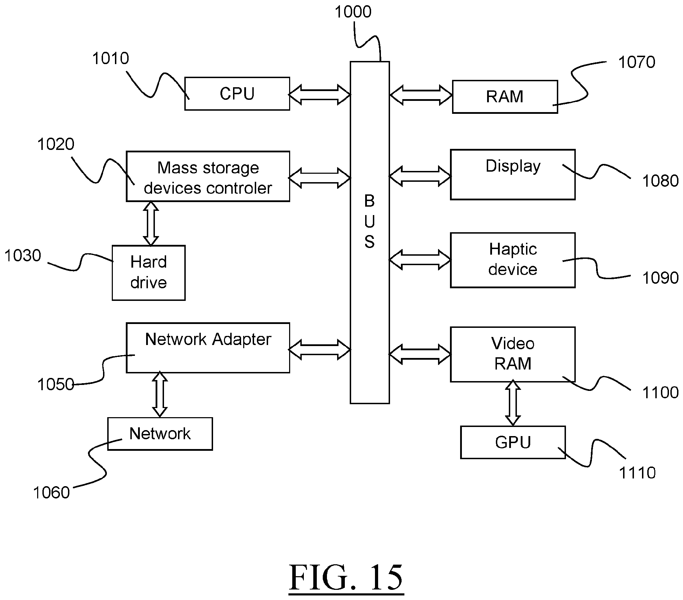

FIG. 15 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1.    A computer-implemented method for machine learning a function configured to take as input a 3D point cloud of a real scene and to output localized representations each of a respective object of the real scene and, for each respective object, a class of the respective object among a predetermined set of classes, the method comprising:

- obtaining a dataset of 3D point clouds annotated, for each 3D point cloud, with localized representations each of a respective object and, for each respective object, with a class of the respective object among the predetermined set of classes; and
- training the function based on the obtained dataset,

the predetermined set of classes comprising a plurality of semantic classes and a plurality of geometric classes.

2. The method of claim 1, wherein the obtaining of the dataset comprises:

- obtaining the 3D point clouds annotated with:

  ◦ for each 3D point cloud, the localized representations each of a respective object, and
  ◦ for each respective object of at least part of the objects, a class of the respective object among the semantic classes;

- computing a value of a geometrical descriptor for each remaining object of the 3D point clouds; and
- clustering the remaining objects according to a partitioning of the distribution of the computed values, the plurality of geometric classes corresponding to the resulting clusters.

3. The method of claim 2, wherein the geometrical descriptor is invariant with respect to orientation at least relative to a vertical axis.

4. The method of claim 3, wherein the geometrical descriptor for a given object comprises a metric of a bounding box of the given object.

5. The method of claim 3 or 4, wherein the geometrical descriptor for a given object comprises:

- one or more coordinates each representing a respective dimension of the bounding box of the given object;
- a coordinate representing a ratio between the minimum and the maximum of the dimensions of the bounding box of the given object;
- a coordinate representing an area of the bounding box of the given object; and/or
- a coordinate representing a volume of the bounding box of the given object.

6. The method of any one of claims 1 to 5, wherein the obtaining of the dataset comprises:

- obtaining the 3D point clouds annotated with:

  ◦ for each 3D point cloud, the localized representations each of a respective object,
  ◦ for each respective object of the at least part of the objects, a class of the respective object among the semantic classes, and
  ◦ for each remaining object, a class of the remaining object among a set of other semantic classes;

- identifying, among all the objects, at least a portion of the objects of the other semantic classes; and
- assigning a geometric class to each identified object.

7. The method of claim 6, wherein the identifying of the at least a portion of the objects of the other semantic classes comprises filtering all the objects of the other semantic classes based on at least one geometrical criterion.

8. The method of claim 7, wherein the at least one geometrical criterion comprises:

- a criterion based on a bounding box volume;
- a criterion based on a ratio between the minimum and the maximum of bounding box dimensions; and/or
- a criterion based on the result of a multiplication of the bounding box volume and the ratio.

9. The method of any one of claims 1 to 8, wherein the function is configured to perform 3D object detection or 3D object segmentation.

10. The method of any one of claims 1 to 9, wherein the 3D point clouds of the dataset are 3D point clouds of indoor scenes and/or obtained via scanning.

11. The method any one of claims 1 to 10, wherein the function has an architecture including a voxelization layer configured to voxelize the 3D point cloud taken as input and/or a convolutional neural network taking as input the 3D point cloud voxelized by the voxelization layer.

12. A computer-implemented method for using a function machine-learnt according to the method of any one of claims 1 to 11, comprising:

   - obtaining a 3D point cloud, optionally by scanning a real scene; and
   - applying the function to the obtained 3D point cloud.

13. A computer program comprising instructions which, when the program is executed by a computer, cause the computer to carry out the method of any of claims 1 to 11 and/or the method of claim 12.

14. A computer readable storage medium having recorded thereon a computer program of claim 13.

15. A system comprising a processor coupled to a memory, the memory having recorded thereon the computer program of claim 13.

Obtaining the annotated 3D point clouds — S11

↓

Identifying, among all the objects, at least a portion of the objects of the other semantic classes — S12

↓

Computing a value of a geometrical descriptor for each remaining object — S13

↓

Clustering the remaining objects — S14

↓

Assigning a geometric class to each identified object — S15

S10

↓

Training the function based on the obtained dataset — S20

## FIG. 1

Furniture Occurences in the database by categories

FIG. 2

10

20

FIG. 3

$V = w*l*h$

Max(w,l,h)

Min(w,l,h)

Z

h

(x,y,z)

X

l

w

Y

y

X

Front vector

y

X

θ

# FIG. 4

FIG. 5

FIG. 6

FIG. 7

EP 4 632 688 A1

FIG. 8

## hbm_29_meta_cbam classes

| | | | |
|---|---|---|---|
| ▪ plant | ▪ stool | ▪ cabinet | ▪ side_table |
| ▪ wardrobe | ▪ chair | ▪ lamp | ▪ tv |
| ▪ curtain | ▪ bench | ▪ vase | ▪ tv_furnitures |
| ▪ door | ▪ pouf | ▪ shelve | ▪ dresser |
| ▪ window | ▪ coffee_table | ▪ nightstand | ▪ book |
| ▪ cushion | ▪ sofa | ▪ sideboard | ▪ meta_0 |
| ▪ radiator | ▪ ceiling_lamp | ▪ table | ▪ meta_1 |
| ▪ sink | ▪ desk | ▪ bed | ▪ meta_2 |

## FIG. 9

$$IoU = \frac{\text{Area of Overlap}}{\text{Area of Union}}$$

# FIG. 10

FIG. 11

EP 4 632 688 A1

S30

Scanned point cloud

S31

Object detection

Objects bounding boxes

S34

3D scene project

Wall and floor segmentation

S32

CAD database

S33

Retrieval

FIG. 12

FIG. 13

FIG. 14

300
310
320

# FIG. 15

Europäisches
Patentamt

European
Patent Office

Office européen
des brevets

**EUROPEAN SEARCH REPORT**

**Application Number**

EP 24 30 5587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/224516 A1 (JAIN AMIT [US] ET AL) 22 July 2021 (2021-07-22) * paragraphs [0004] - [0006], [0013], [0065], [0069] - [0071], [0080] * ----- | 1-15 | INV. G06V10/764 G06T7/00 G06V10/82 G06V20/10 G06V20/64 |
| X | Yang Bo ET AL: "Learning Object Bounding Boxes for 3D Instance Segmentation on Point Clouds", , 5 September 2019 (2019-09-05), XP093204579, Retrieved from the Internet: URL:https://arxiv.org/pdf/1906.01140 [retrieved on 2024-09-13] * section 2 * ----- | 1,12-15 | |

**TECHNICAL FIELDS SEARCHED (IPC)**

G06V
G06T

The present search report has been drawn up for all claims

| Place of search | Date of completion of the search | Examiner |
|---|---|---|
| The Hague | 16 September 2024 | Mukasa, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 632 688 A1**

## ANNEX TO THE EUROPEAN SEARCH REPORT
## ON EUROPEAN PATENT APPLICATION NO.

EP 24 30 5587

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2024

| Patent document cited in search report | Publication date | Patent family member(s) | Publication date |
|---|---|---|---|
| US 2021224516 A1 | 22-07-2021 | US 2021224516 A1 | 22-07-2021 |
| | | US 2023094061 A1 | 30-03-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23305001


**Non-patent literature cited in the description**

- **HOU, JI et al.** Exploring data-efficient 3d scene understanding with contrastive scene contexts. *Proceedings of the IEEE/CVF Conference on Computer Vision and Pattern Recognition*, 2021, https://openaccess.thecvf.com/content/CVPR2021/papers/Hou_Exploring_Data-Efficient_3D_Scene_Understanding_With_Contrastive_Scene_Contexts_CVPR_2021 _paper.pdf

- **ALIREZA FATHI** ; **RUI HUANG**. *3D Scene Understanding with TensorFlow3D*, https://ai.googleblog.com/2021/02/3d-scene-understanding-with-tensorflow.html
- **CHARLES R. QI** ; **LI YI** ; **HAO SU** ; **LEONIDAS J. GUIBAS**. *PointNet++: Deep Hierarchical Feature Learning on Point Sets in a Metric Space*, 2017
- **XIAN-FENG HAN** ; **SHI-JIE SUN** ; **XIANG-YU SONG** ; **GUO-QIANG XIAO**. *3D Point Cloud Descriptors in Hand-crafted and Deep Learning Age: State-of-the-Art*, 2020